Europäisches Patentamt

European Patent Office

Office européen des brevets

(11) Veröffentlichungsnummer: **0 432 521 A1**

(12) **EUROPÄISCHE PATENTANMELDUNG**

(21) Anmeldenummer: 90122116.8

(22) Anmeldetag: 20.11.90

(51) Int. Cl.⁵ **B23K 26/00**, B23K 26/14

(30) Priorität: 09.12.89 DE 3940766

(43) Veröffentlichungstag der Anmeldung:
19.06.91 Patentblatt 91/25

(84) Benannte Vertragsstaaten:
CH DE FR IT LI

(71) Anmelder: MESSER GRIESHEIM GMBH
Hanauer Landstrasse 330
W-6000 Frankfurt/Main(DE)

(72) Erfinder: Heine, Peter
Jahnstrasse 9
W-6457 Maintal II(DE)

(54) **Verfahren zum Schneiden von Werkstoffen.**

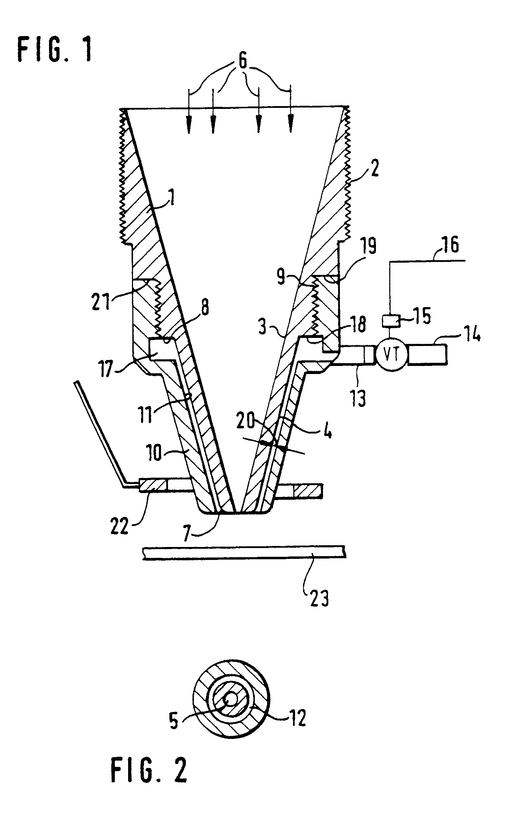

(57) Die Erfindung betrifft ein Verfahren zum Schneiden von Werkstoffen mit einem aus einem Laserstrahlbearbeitungskopf austretenden Laser- und Schneidgasstrahl unter Zusatz eines flüssigen Kühlmittels, bei dem das Kühlmittel von dem Schneidgasstrahl (6) angesaugt und ringförmig zerstäubt (Sprühnebel) wird (Fig. 1).

FIG. 1

## VERFAHREN ZUM SCHNEIDEN VON WERKSTOFFEN

Die Erfindung betrifft ein Verfahren zum Schneiden von Werkstoffen mit einem aus einem Laserstrahlbearbeitungskopf austretenden Laser- und Schneidgasstrahl unter Zusatz eines flüssigen Kühlmittels.

Metallische Werkstoffe werden üblicherweise mit Sauerstoffunterstützung laserstrahlgeschnitten. Die dabei entstehende Oxidation ist mit einer zum Teil hohen Wärmeerzeugung verbunden, die den Schneidvorgang stark unterstützt. Hierdurch ist die Feinheit der herstellbaren Konturen im Dauerstrichbetrieb (cw-Betrieb) eingeschränkt.

Um diese Nachteile zu vermeiden, ist es aus der DE-A-23 38 514 bekannt, die Umgebung der jeweiligen Bearbeitungsstelle mit einem Fluidstrahl zu kühlen. Dabei ist die Kühleinrichtung als separate Düse ausgebildet, die eine Vielzahl von feinen Kühlmitteldüsen aufweisen soll. Der DE-A-30 37 981 ist dagegen eine separate Düse zu entnehmen, bei der das Kühlmittel aus einem Ringkanal strömt. Um den Herstellungsaufwand der in der DE-A-23 38 514 beschriebenen Kühleinrichtung zu reduzieren, wird gemäß der DE-A-36 37 568 vorgeschlagen, daß am Düsenaußenmantel der Laserdüse oder an einem den Düsenaußenmantel umgebenden Hülseninnenmantel die Kanäle bildenden Längsnuten angeordnet sind. Weiterhin ist es aus den mi-Publikationen, 1989, Seiten 10 bis 13 bekannt, daß durch Kühlmittelzusatz die Rauhtiefe über eine Sauerstoffdruckerhöhung verringert werden kann. Das Kühlmittel wird von einer Seite zugeführt und unterhalb des zu schneidenden Materials abgesaugt.

Neben diesem die Kühlung der Bearbeitungsstelle betreffenden Stand der Technik sind weiterhin Veröffentlichungen bekannt, die sich auf die Kühlung der abstandssensitiven Sensoren der Laserstrahlaustrittsdüse beziehen. Gemäß der DE-A-38 16 773 soll dies über ein Kühlgas erfolgen, das auf einen die Düse umgebenden Kühlkragen trifft, während in der EP-A-02 94 324 das Kühlgas in eine die Sensoren enthaltene Ringkammer strömt.

Nachteilig bei den Kühleinrichtungen ist entweder deren separate Ausbildung oder die Ausbildung von Einzelkanälen und die erforderliche Absaugung unterhalb des Materials. Dabei ist der DE-A-36 37 568 zu entnehmen, daß die Zuführungsleitung strömungsmäßig mit dem Ringkanal der Längsnuten verbunden ist. Eine Zuordnung eines kapazitiven Senors kann diesen Schriften nicht entnommen werden. Es muß jedoch angenommen werden, daß kein kapazitiver Sensor verwendet wird, da dessen Funktions durch ein flüssiges Kühlmittel beeinträchtigt wird.

Der Erfindung liegt daher die Aufgabe zugrunde, ein gegenüber dem Stand der Technik verbessertes Verfahren und einen verbesserten Laserbearbeitungskopf zu schaffen, mittels welchen die genannten Nachteile vermieden werden können.

Ausgehend von dem im Oberbegriff der Ansprüche 1 und 5 berücksichtigten Stand der Technik ist diese Aufgabe erfindungsgemäß mit den kennzeichnenden Teilen der Ansprüche 1 und 5 gelöst.

Vorteilhafte Weiterbildungen der Erfindung sind in den Unteransprüchen angegeben.

Durch das erfindungsgemäße Ansaugen und ringförmige Zerstäuben wird die Menge des flüssigen Kühlmittels er-heblich reduziert und gleichzeitig dosiert, da diese von der Ausströmgeschwindigkeit des Schneidgasstrahles abhängig ist und vorzugsweise nahezu drucklos in dem zwischen dem Außenmantel der Laserstrahlaustrittsdüse und dem Innenmantel der Hülse gebildeten Ringkanal angeordnet ist. Die Zerstäubung der geringen Menge durch den Schneidgasdruck und das gerundete Ende des Außenmantels führt zur Bildung eines Sprühnebels. Oberhalb des Sprühnebels wird der kapazitive Ringsensor angeordnet, so daß die aufsteigende Feuchtigkeit den Ringsensor definiert beeinflusst und eine Korrektur schon vorher eingestellt werden kann. Aufgrund der geringen Menge des flüssigen Kühlmittels, vorzugsweise Wasser, das Schutzmittel wie Rostschutz, Farbe, Öl usw. enthalten kann, kann auf eine Absaugung verzichtet werden. Die Herstellung des Außenmantels der Laserstrahlaustrittsdüse bzw. des Innenmantels der Hülse können wesentlich vereinfacht werden, weil deren Oberflächen "glatt" ausgebildet sind. Durch die erfindungsgemäße Ausbildung der "glatten Oberflächen" können die Hülse und der Außenmantel gereinigt werden, wenn sich beim Lochstechvorgang Schneid- und Schlackespritzer in dem Ringkanal absetzen. Hierzu wird die Hülse abgeschraubt. Der Außenmantel der Laserstrahlaustrittsdüse verbleibt während der Reinigung in justierter Lage an dem Laserbearbeitungskopf. Die Standzeit der aus Hülse und Außenmantel der Laserstrahlaustrittsdüse gebildeten Ringdüse erhöht sich durch diese Maßnahme wesentlich. Dabei wird durch die Ausbildung der Kühlmitteldüse als offene Ringdüse immer ein Teil des Kühlmittels unabhängig von der Schneidrichtung in die Schnittfuge geblasen.

Ein weiterer Vorteil des erfindungsgemäßen Verfahrens besteht darin, daß bei gleicher Laserleistung durch die gezielte Kühlmittelzufuhr eine größere Tiefenwirkung im Werkstoff erreicht wird. So wurden bei einer Laserleistung von 460 Watt aus dem Werkstoff St 371 8 Millimeter Dick, Ringe von 70 Millimeter Durchmesser und 5 Millimeter Breite ausgeschnitten. Der Druck des Schneidsauerstoffstrahles betrug 6 Bar, die Schneidgeschwindigkeit 300 Millimeter/Minute. Wie dieses Bearbeitungsbeispiel zeigt, konnte durch die Erfindung die schneidbare Dicke des Werkstoffes um 25 % gesteigert werden.

Ein Ausführungsbeispiel soll anhand der beigefügten Zeichnung erläutert werden. Es zeigen

Fig. 1      einen Laserbearbeitungskopf mit einer erfindungsgemäßen Kühlmitteldüse

Fig. 2      eine Draufsicht auf den Laserbearbeitungskopf nach der Erfindung

Der in der Fig. 1 dargestellte Laserstrahlbearbeitungskopf besteht aus einer Laserstrahlaustrittsdüse 1, welche mit einem Anschluß 2 zum Einschrauben in einen Träger für die Optik versehen ist. Die Laserstrahlaustrittsdüse 1 besitzt einen im wesentlichen konischen Innenmantel 3, der unter einem spitzen Winkel von ungefähr 30 Grad verläuft. Der untere Bereich des Außenmantels 4 der Laserstrahldüse 1 weist eine ohne Vertiefungen oder Erhöhungen ausgebildete glatte Oberfläche auf, die unter dem gleichen Winkel wie der Innenmantel konisch verläuft. Durch die Austrittsöffnung 5 des Laserstrahles strömt das oberhalb des Anschlußes 2 in die Laserstrahlaustrittsdüse 1 zugeführte Schneidgas (durch Pfeile 6 angedeutet) An der Austrittsöffnung 5 ist der Außenmantel 4 gerundet oder mit einer Fase versehen. Der Radius 7 beträgt 0,1 bis 3,0 Millimeter. Der Außenmantel 4 geht nach dem konischen Verlauf in einen zylindrischen Absatz 8 mit Gewinde 9 über, an dem eine Hülse 10 mit konisch verlaufendem Innenmantel 11 befestigt ist. Die Oberfläche des Innenmantels 11 ist ebenfalls glatt ausgebildet und verläuft im wesentlichen parallel zu dem Außenmantel 4 der Laserstrahldüse 1. Der Innenmantel 11 der Hülse 10 bildet zusammen mit dem Außenmantel 4 der Laserstrahldüse 1 eine Ringdüse bzw. einen Ringkanal 12. An der Hülse 10 ist ein Kühlmittelanschluß 13 befestigt, an den eine Kühlmittelzuführleitung 14 mit einem vorzugsweise ansteuerbaren Feindosierventil 15 befestigt ist. Die Ansteuerung kann auf vielfältige Weise erfolgen und ist durch die Steuerstrecke 16 angedeutet. Das flüssige Kühlmittel, vorzugsweise Wasser, kann aus einem in der Nähe der Laserstrahldüse 1 angeordneten drucklosen Behälter oder auch einem unter Druck stehenden Leitungsnetz entnommen werden.

Es gelangt über den Kühlmittelanschluß 13 in einen mit dem Ringkanal 12 verbundenen Verteilerraum 17, der durch eine Schulter 18 des zylindrischen Absatzes 8 entgegengesetzt zur Austrittsrichtung des Schneidgasstrahles 6 begrenzt ist. Über eine weitere, nach dem Gewinde 10 der Laserstrahlaustrittsdüse 1 vorgesehene Schulter 19, wird die Einschraubtiefe der Hülse 10 begrenzt, wodurch der Abstand 20 zwischen dem Außenmantel 4 der Laserstrahlaustrittsdüse 1 und dem Innenmantel 11 der Hülse 10 eingestellt wird. Besonders gute Ergebnisse wurden bei einem Abstand 20 um 0,5 Millimeter erzielt, jedoch kann das Verfahren in einem Bereich zwischen 0,2 und 1.5 Millimeter erfindungsgemäß eingesetzt werden. Die einzustellenden Abstände 20 sind hierbei unter anderem von der Viskosität des Kühlmittels abhängig. Bei dem oben genannten bevorzugten Bereich wurde als Kühlmittel Wasser ohne Zusätze verwendet. Dabei ist durch Unterlegringe, die zwischen der Schulter 19 und der Stirnseite 21 der Hülse 10 angeordnet werden, der Abstand 20 veränderbar.

Oberhalb der Laserstrahlaustrittsdüse 1 mit Hülse 10 ist ein ringförmiger kapazitiver Sensor 22 angeordnet, der in an sich bekannter Weise mit einer Höhenverstellvorrichtung des Laserbearbeitungskopfes zusammenwirkt und den Laserbearbeitungskopf während der Bearbeitung eines Werkstoffes 23 auf immer gleicher Höhe zur Werkstoffoberfläche führt.

Dabei ist es nicht zwingend erforderlich, daß der Sensor als Ring oberhalb des Sprühnebels angeordnet ist; vielmehr kann auch die Spitze der Laserstrahlaustrittsdüse 1 als Sensor ausgebildet sein, da auch bei dieser Ausbildungsvariante die Funktion des Sensors überraschenderweise erhalten bleibt.

Dies wird auf die nur geringen Mengen (Minima 750 cm$^3$ h bei 5 Bar Schneidgasdruck) des flüssigen Kühlmittels zurückgeführt, die nach der Freigabe des Feindosierventiles 15 über den Kühlmittelanschluß 13 und den Verteilerraum 17 in den Ringkanal 17 gelangen. Beim Zuschalten des Schneidgases tritt dieses nach der Bündelung durch den Innenmantel 3 der Laserstrahlaustrittsdüse 1 als Schneidgasstrahl aus der Austrittsöffnung 5 aus und umgibt den auf der Mittelachse liegenden Laserstrahl konzentrisch. Durch den mit bis zu 18 Bar austretenden Schneidgasstrahl wird das Kühlmittel in der Ringdüse 12 angesaugt und von dem Schneidgasstrahl mitgerissen (injiziert). Der Radius 7 fächert dabei das Kühlmittel am Ende des Ringkanales 12 auf, so daß dieses innerhalb des Schneidsauerstoffstrahles fein zerteilt (dispergiert) wird und als Sprühnebel auf die Oberfläche des Werkstoffes auftrifft. Dabei geht das flüssige Kühlmittel in den gasförmigen Aggregatzustand über. Durch das Kühlmittel wird im Bereich der Wärmeeinflußzone die Wärme aus dem Werkstoff abgeführt und zum anderen entsteht im Bereich der Schnittfuge ein Temperaturstau. Dies hat zur Folge, daß sich die Tiefenwirkung bei gleicher Laserleistung erhöht.

**Ansprüche**

1. Verfahren zum Schneiden von Werkstoffen mit einem, aus einem Laserstrahlbearbeitungskopf austretenden Laser- und Schneidgasstrahl unter Zusatz eines flüssigen Kühlmittels, dadurch gekennzeichnet, daß das Kühlmittel von dem Schneidgasstrahl (6) angesaugt und ringförmig zerstäubt (Sprühnebel) wird.

2. Verfahren nach Anspruch 1, dadurch gekennzeichnet, daß das Kühlmittel aus einer den Schneidgasstrahl (6) ringförmig umgebenden Düsenöffnung (12) angesaugt wird, deren Austrittsöffnung in Abhängigkeit von der Viskosität des Kühlmittels zwischen 0,2 und 1,5 Millimeter einstellbar ist.

3. Verfahren nach Anspruch 1 oder 2, dadurch gekennzeichnet, daß die Düsenöffnung (12) durch eine den Außenmantel (4) der Laserstrahlaustrittsdüse (1) umgebenden Hülse (10) gebildet wird, die zur Reinigung von dem Außenmantel (4) entfernt werden kann.

4. Verfahren nach einem der Ansprüche 1 bis 3, dadurch gekennzeichnet, daß der Laserbearbeitungskopf mittels eines oberhalb des Sprühnebels angeordneten kapazitiven Sensors (22) in vorgegebenem Abstand zu dem Werkstoff (23) gehalten wird.

5. Verfahren nach einem der Ansprüche 1 bis 4, dadurch gekennzeichnet, daß bei einem Schneidgasdruck um 5 Bar in der Stunde um 750 cm$^3$ Kühlmittel auf den Werkstoff (23) auftrifft.

6. Laserstrahlbearbeitungskopf mit einer Laserstrahlaustrittsdüse (1) und einer diese umgebenden Kühlmitteldüse sowie mit Anschlüssen für die Zufuhr von Schneidgasen und Kühlmittel zu den Düsen, dadurch gekennzeichnet, daß die Laserstrahldüse (1) einen konischen Außenmantel (4) aufweist, der im Abstand (20) von 0,2 bis 1,5 Millimeter von einer Hülse (10) mit konischem Innenmantel (11) umgeben ist.

7. Laserstrahlbearbeitungskopf nach Anspruch 6, dadurch gekennzeichnet, daß der Außenmantel (4) der Laserstrahlaustrittsdüse (1) an der Austrittsöffnung (5) gerundet oder gefast ist.

8. Laserstrahlbearbeitungskopf nach Anspruch 6 oder 7, dadurch gekennzeichnet, daß der konische Außenmantel (4) der Laserstrahlaustrittsdüse (1) einen zylindrischen Absatz (8) mit Gewinde (9) aufweist, an dem die Hülse (10) befestigt werden kann.

9. Laserstrahlbearbeitungskopf nach einem der Ansprüche 6 bis 8, dadurch gekennzeichnet, daß der Laserstrahlaustrittsdüse (1) mit Hülse (10) ein kapazitiver Sensor (22) zugeordnet ist.

10. Laserstrahlbearbeitungskopf nach einem der Ansprüche 6 bis 9, dadurch gekennzeichnet, daß die Hülse (10) einen Kühlmittelanschluß (13) aufweist und in der Kühlmittelzuführleitung (14) ein Feindosierventil (15) angeordnet ist.

# FIG. 1

# FIG. 2

Europäisches
Patentamt

**EUROPÄISCHER
RECHERCHENBERICHT**

Nummer der Anmeldung

**EP 90 12 2116**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | DE-U-8 911 733   (MAHO)<br>* Seite 5,8; Figur 1 *<br>--- | 1,2,3,6,8,<br>10 | B 23 K<br>26/00<br>B 23 K 26/14 |
| Y,A | DE-A-3 637 568   (TRUMPF)<br>* Spalte 4; Figur 1 *<br>--- | 1,2,3,6,10 | |
| A | PATENT ABSTRACTS OF JAPAN vol. 12, no. 109<br>(M-682)(2956) 08 April 1988,<br>& JP-A-62 238092 (SANOYASU) 19 Oktober 1987,<br>* das ganze Dokument *<br>--- | 1-3 | |
| A | PATENT ABSTRACTS OF JAPAN vol. 10, no. 63<br>(C-332)(2120) 13 März 1986,<br>& JP-A-60 200909 (TOYOTA SHIYATAI) 11 Oktober 1985,<br>* das ganze Dokument *<br>----- | 1,2 | |
| | | | RECHERCHIERTE SACHGEBIETE (Int. Cl.5) |
| | | | B 23 K |

Der vorliegende Recherchenbericht wurde für alle Patentansprüche erstellt

| Recherchenort | Abschlußdatum der Recherche | Prüfer |
|---|---|---|
| Den Haag | 14 März 91 | DEMOLDER J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&: Mitglied der gleichen Patentfamilie,
   übereinstimmendes Dokument